# EUROPEAN PATENT SPECIFICATION

(11) **EP 4 015 254 B1**
(45) Date of publication and mention of the grant of the patent: **16.10.2024**
(21) Application number: 21212086.9
(22) Date of filing: 02.12.2021
(51) Int. Cl.: B60C 15/06, B60C 15/04

(54) **TIRE WITH IMPROVED BEAD STRUCTURE**
REIFEN MIT VERBESSERTER WULSTSTRUKTUR
PNEUMATIQUE À BOURRELET PERFECTIONNÉ

(30) Priority: 16.12.2020 US 202017124009
(43) Date of publication of application: 22.06.2022
(73) Proprietor: The Goodyear Tire & Rubber Company, Akron, OH 44316 (US)
(72) Inventor: UEYOKO, Kiyoshi, Copley, 44321 (US)
(74) Representative: Kutsch, Bernd

(56) References cited:
- WO-A1-2013/182599
- WO-A1-2019/240101

## Description

### Field of the Invention

The invention relates in general to pneumatic tires, and more particularly to a bead construction for heavy duty vehicles such as aircraft or trucks.

### Background of the Invention

Annular tensile members, commonly referred to as tire bead cores, are designed to securely hold the tire on the rim during use. The tire beads provide a radially inner portion between the bead core and the rim that is radially compressed, and as this portion is compressed, the bead core is placed in tension. Radial compression occurs as the tire is mounted on a tapered rim seat by the action of the internal pressure of the tire pushing the bead axially outwardly toward the vertical bead flange.

Recently, attempts have been made to provide a heavy-duty bead construction that has a reduced weight. However, problems have occurred such as creep under load and fretting. In creep under load, the synthetic cables or cords will stretch under load and as the plastic flows, the restraining force actually will lower with time. A second problem is fretting, which is when brittle fractures occur if the cords are placed in compression. Thus, an improved bead design which is light weight without sacrificing strength is desired, and that further overcomes the disadvantages mentioned above.

WO 2019/240101 A1 and WO 2013/282599 A1 each disclose a tire in accordance with the preamble of claim 1.

### Summary of the Invention

The invention relates to a tire in accordance with claim 1.

Dependent claims refer to preferred embodiments of the invention.

Preferably, the tire is a radial tire, more preferably a radial aircraft tire.

The invention provides in a first preferred aspect a pneumatic radial tire having a bead portion provided therein with a bead core, and a first layer of a plurality of sheath wires surrounding the bead core, and a second layer formed of a plurality of sheath wires surrounding the first layer, wherein the sheath wires of the second layer have a diameter less than the sheath wires of the first layer.

### Definitions

"Aspect Ratio" means the ratio of a tire's section height to its section width.

"Axial" and "axially" mean the lines or directions that are parallel to the axis of rotation of the tire.

"Bead" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Flipper" means a reinforced fabric wrapped about the bead core.

"Radial" and "radially" mean directions radially toward or away from the axis of rotation of the tire.

### Brief Description of the Drawings

The invention will be described by way of example and with reference to the accompanying drawings in which:
FIG. 1 is a cross-sectional view of one half of a radial ply tire;
FIG. 2 is a close-up view of the lower sidewall and bead portion of the tire of FIG. 1;
FIG. 3 is a cross-sectional view of the bead core of the tire of FIG. 1;
FIG. 4 is a cross-sectional view of a second embodiment of a bead core of the present invention; and
FIG. 5 is a cross-sectional view of a third embodiment of a bead core of the present invention.
FIG. 6 is a cross-sectional view of a bead core not being in accordance with the present invention.

### Detailed Description of Preferred Embodiment of the Invention

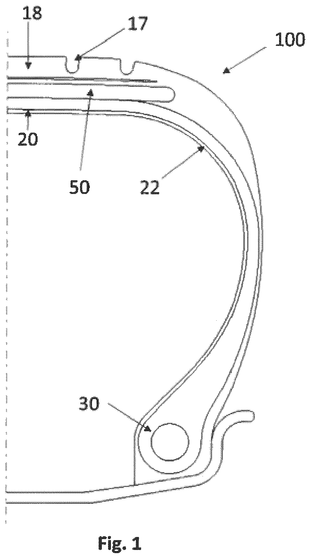

With reference to FIG. 1, a cross-sectional view of one half of a radial ply tire 100 is shown. The tire 100, as illustrated, is a construction for use as an aircraft tire. The tire 100 by way of example is a radial aircraft tire exposed to high internal pressures and tremendous loads. Other such tires such as earthmover, truck and farm tires are also ideally suited for using the bead core of the present invention.

The tire 100 is a radial ply tire having air imperious inner liner 22 which contains fluid or air under pressure. Radially outward of the inner liner 22 are one or more radial plies 20. Each ply 20 extends from an annular tensile member commonly referred to as a bead core 30. As shown the plies 20 are anchored about the bead core 30 either turning axially out and up forming a ply turnup or alternately turning axially in and under the bead core 30. Radially above the bead core 30 is an optional rubber apex.

Radially outward of the carcass plies 20 is a belt package 50 comprising a plurality of belt reinforcing layers, each layer is reinforced with parallel reinforcement cords. A top belt layer is shown radially outward of the belt layers 50. Above the belt is a tread 18 as shown, the tread 18 has a plurality of optional circumferentially continuous grooves 17. The tire structure 100 as mentioned is an example of one type of tire structures that can utilize the bead core 30 of the present invention. Although the tire 100 as shown is an aircraft tire structure, the invention is usable in any highly loaded heavy-duty tire structure.

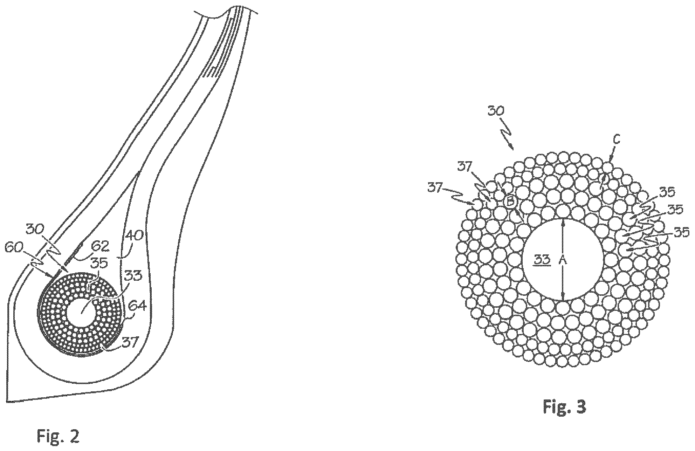

With reference to FIG. 2, a close-up view of the lower sidewall and bead core 30 of the present invention is shown. As illustrated, the central core 33 is shown may optionally be a single wire or rod wound at 360 degree, wherein the ends of the wire are secured together to form one continuous hoop or central core 33. The central core 33 preferably has a diameter A in the range of 3 mm to 20 mm, and more preferably in the range of 5 to 15 mm. As shown in FIG. 3, the cross-sectional shape of the central core is a solid circle. As shown in FIG. 3, the central core 33 is preferably made of an alloy of aluminum, or other lightweight metal alloy such as magnesium, titanium, or any metal alloy having a weight less than steel. Preferably if a metal central core is used, it is made of aluminum or an aluminum alloy which has superb strength ratios while maintaining excellent ductility. The central core may also be made of a nonmetal material such aramid, carbon fiber, or plastic resin.

As further illustrated, the central core 33 is wrapped by a first annular row of inner sheath wires 35. Preferably, there is at least two annular rows of inner sheath wires 35, wherein each inner sheath wire has a diameter B. The diameter of the wires of the inner sheath wires 35 are the same, and range in size from 1.5 mm to 3 mm, and more preferably, in the range of 1.8 mm to 2.5 mm. Preferably, there are three to four annular rows of inner sheath wires 35. The wires 35 of the sheath layers are steel that are helically or spirally wound about the central core 33.

The bead core 30 further includes one or more annular rows of outer sheath layers 37. The wires in the outer annular row have a smaller diameter C than the diameter B of the wires in the inner sheath layers. The diameter C of the wires of the outer sheath layer 37 are the same, and range in size from 1.5 mm to 2.5 mm or range in size from 1 mm to 2 mm.

Wrapped around the entire bead core is a flipper 60, having an axially inner leg 62 and an axially outer leg 64. The flipper 60 is formed from a reinforced fabric wrapped about the bead core such as nylon or polyester.

The reinforcement cords of the flipper material preferably have a 840 dtex/2, or a 1260 dtex/2, or a 1260 dtex/3, a 1890 dtex/2 and a 1890 dtex/3 nylon cord construction.

Preferably, the flipper material is nylon 6/6.

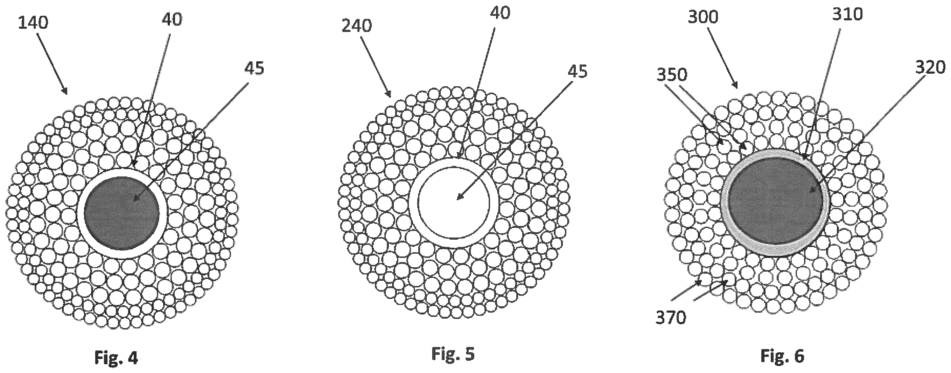

FIG. 4 illustrates a second embodiment of a bead core 140 of the present invention. The second embodiment is the same as FIG. 3, except for the following differences. The central core 40 has a cross-sectional shape of an annular tube, wherein the interior portion 45 of the annular tube is filled with a filler. The annular tube may be metal, aramid, nylon, carbon fiber or plastic. The metal is preferably aluminum or steel. The filler may be metal, plastic, carbon fiber or plastic. As shown in FIG. 5, a third embodiment of a bead core 240 is shown, which is the same as the bead core of FIG. 5 except for the following differences. The interior portion 45 of the central core is filled with air (i.e., its empty except for air).

FIG. 6 illustrates a bead core 300 not being in accordance with the present invention. In a fourth embodiment of the present invention, the central core 310 is formed of an annular tube 320, wherein the interior of the tube 320 may be filled with a filler or unfilled (with air). The annular tube 310 may be metal, aramid, nylon, carbon fiber or plastic. The metal is preferably aluminum or steel. The filler may be metal, plastic, carbon fiber or aramid. In this fourth embodiment there are two inner rows 350 of annular wires having the same diameter. The diameter of the wires of the inner row 350 are the same, and range in size from 1.5 mm to 3 mm, and more preferably, in the range of 1.8 mm to 2.5 mm. The bead core 300 further has one radially outer row 370 of larger diameter wires, wherein the range of the diameters range from 1 mm to 2.5 mm, more preferably from 1 mm to 2 mm or from 1.5 mm to 2.5 mm.

The entire bead core is coated in an adhesive rubber layer and then a textile ply cord is helically wrapped around the bead core.

In all embodiments described above, the sheath wires in the second annular layer 37, 370 preferably have a diameter at least 0.2 mm or at least 0.5 mm less than the diameter of the sheath wires in the first annular layer 35, 350.

## Claims

1. A pneumatic tire having a bead portion provided therein with a bead core (30, 140, 240, 300), the bead core (30, 140, 240, 300) having a central bead core portion (33, 40, 310), a first annular layer (35, 350) of a plurality of sheath wires surrounding the central bead core portion (33, 40, 310), said plurality of sheath wires in said first annular layer (35, 350) having all the same diameter ranging from 1.5 to 3 mm, and a second annular layer (37, 370) formed of a plurality of sheath wires surrounding the first annular layer (35, 350), said plurality of sheath wires in said second annular layer (37, 370) having all the same diameter ranging from 1 to 2.5 mm, wherein the sheath wires of the second annular layer (37, 370) have a diameter less than the diameter of the sheath wires of the first annular layer (35, 350), **characterized in that** there are a total of n annular rows of sheath wires in the first annular layer (35, 350) and a total of n-1 annular rows of sheath wires in the second annular layer (37, 370), n being an integer.

2. The pneumatic tire of claim 1 wherein the diameter of the sheath wires of the first annular layer (35, 350) is in the range of from 1.8 to 2.5 mm.

3. The pneumatic tire of claim 1 or 2 wherein the diameter of the sheath wires of the second annular layer (37, 370) is in the range of from 1 mm to 2 mm or from 1.5 mm to 2.5 mm.

4. The pneumatic tire of at least one of the previous claims wherein the cross-sectional shape of the bead core (30, 140, 240, 300) is a circle.

5. The pneumatic tire of claim 4 wherein the circle is formed by the first and second annular layers and wherein the central bead core portion (33, 40, 310) is a hollow portion or a tube portion.

6. The pneumatic tire of claim 4 wherein the interior of the circle is filled with a metal, nonmetal, aramid, carbon fiber, plastic filler or is filled with air.

7. The pneumatic tire of at least one of the previous claims wherein the cross-sectional shape of the central bead core portion (33, 40, 310) is a circle.

8. The pneumatic tire of at least one of the previous claims wherein bead core (30, 140, 240, 300) comprises or is made of a material selected from the group of titanium, aluminum, magnesium, or other metal alloy.

9. The pneumatic tire of at least one of the previous claims wherein the bead core (30, 140, 240, 300) comprises or is made of a material selected from the group of aramid, carbon fiber, plastic or other nonmetal material.

10. The pneumatic tire of at least one of the previous claims wherein there are a total of two or three annular rows of sheath wires in the first annular layer (35, 350).

11. The pneumatic tire of at least one of the previous claims wherein there are a total of one or two annular rows of sheath wires in the second annular layer (37, 370).

12. The pneumatic tire of at least one of the previous claims wherein the central bead core portion (33, 40, 310) has a diameter (A) in the range of from 3 mm to 20 mm, preferably in the range of from 5 to 15 mm.

13. The pneumatic tire of at least one of the previous claims wherein the bead core (30, 140, 240, 300) is coated in an adhesive rubber layer and, optionally, wherein a ply is helically wrapped around the bead core (30, 140, 240, 300) and the adhesive rubber layer.

## Patentansprüche

1. Luftreifen, der einen Wulstabschnitt umfasst, der darin mit einem Wulstkern (30, 140, 240, 300) versehen ist, wobei der Wulstkern (30, 140, 240, 300) einen zentralen Wulstkernabschnitt (33, 40, 310) aufweist, eine erste ringförmige Schicht (35, 350) aus einer Vielzahl von Manteldrähten, die den zentralen Wulstkernabschnitt (33, 40, 310) umgeben, wobei die oben genannte Vielzahl von Manteldrähten in der ersten oben genannten ringförmigen Schicht (35, 350) alle den gleichen Durchmesser im Bereich von 1.5 bis 3 mm aufweisen, und eine zweite ringförmige Schicht (37, 370), die aus einer Vielzahl von Manteldrähten gebildet ist, die die erste ringförmige Schicht (35, 350) umgeben, wobei die Vielzahl von Manteldrähten in der zweiten ringförmigen Schicht (37, 370) alle den gleichen Durchmesser im Bereich von 1 bis 2,5 mm aufweisen, wobei die Manteldrähte der zweiten ringförmigen Schicht (37, 370) einen Durchmesser aufweisen, der kleiner ist als der Durchmesser der Manteldrähte der ersten ringförmigen Schicht (35, 350), **dadurch gekennzeichnet, dass** es insgesamt n ringförmige Reihen von Manteldrähten in der ersten ringförmigen Schicht (35, 350) und insgesamt n-1 ringförmige Reihen von Manteldrähten in der zweiten ringförmigen Schicht (37, 370) gibt, wobei n eine ganze Zahl ist.

2. Luftreifen nach Anspruch 1, wobei der Durchmesser der Manteldrähte der ersten ringförmigen Schicht (35, 350) im Bereich von 1,8 bis 2,5 mm liegt.

3. Luftreifen nach Anspruch 1 oder 2, bei dem der Durchmesser der Manteldrähte der zweiten ringförmigen Schicht (37, 370) im Bereich von 1 mm bis 2 mm oder von 1,5 mm bis 2,5 mm liegt.

4. Luftreifen nach mindestens einem der vorhergehenden Ansprüche, wobei die Querschnittsform des Wulstkerns (30, 140, 240, 300) ein Kreis ist.

5. Luftreifen nach Anspruch 4, wobei der Kreis durch die erste und die zweite ringförmige Schicht gebildet wird und wobei der zentrale Wulstkernabschnitt (33, 40, 310) ein hohler Abschnitt oder ein Schlauchabschnitt ist.

6. Luftreifen nach Anspruch 4, bei dem das Innere des Kreises mit einem Metall, einem Nichtmetall, einem Aramid, einer Kohlenstofffaser oder einem Kunststofffüllstoff oder mit Luft gefüllt ist.

7. Luftreifen nach mindestens einem der vorhergehenden Ansprüche, wobei die Querschnittsform des zentralen Wulstkernteils (33, 40, 310) ein Kreis ist.

8. Luftreifen nach mindestens einem der vorhergehenden Ansprüche, bei dem der Wulstkern (30, 140, 240, 300) ein Material umfasst oder aus einem Material hergestellt ist, das aus der Gruppe Titan, Aluminium, Magnesium oder einer anderen Metalllegierung ausgewählt ist.

9. Luftreifen nach mindestens einem der vorhergehenden Ansprüche, wobei der Wulstkern (30, 140, 240, 300) ein Material umfasst oder aus einem Material hergestellt ist, das aus der Gruppe von Aramid, Kohlenstofffaser, Kunststoff oder einem anderen nichtmetallischen Material ausgewählt ist.

10. Luftreifen nach mindestens einem der vorhergehenden Ansprüche, wobei in der ersten ringförmigen Schicht (35, 350) insgesamt zwei oder drei ringförmige Reihen von Manteldrähten vorhanden sind.

11. Luftreifen nach mindestens einem der vorhergehenden Ansprüche, wobei insgesamt eine oder zwei ringförmige Reihen von Manteldrähten in der zweiten ringförmigen Schicht (37, 370) vorhanden sind.

12. Luftreifen nach mindestens einem der vorhergehenden Ansprüche, wobei der zentrale Wulstkernabschnitt (33, 40, 310) einen Durchmesser (A) im Bereich von 3 mm bis 20 mm, vorzugsweise im Bereich von 5 bis 15 mm, aufweist.

13. Luftreifen nach mindestens einem der vorhergehenden Ansprüche, bei dem der Wulstkern (30, 140, 240, 300) mit einer klebenden Gummischicht überzogen ist und bei dem gegebenenfalls eine Schicht schraubenförmig um den Wulstkern (30, 140, 240, 300) und die klebende Gummischicht gewickelt ist.

## Revendications

1. Bandage pneumatique qui possède une portion faisant office de talon, prévue dans le premier cité, qui comprend une tringle de talon (30, 140, 240, 300), la tringle de talon (30, 140, 240, 300) possédant une portion centrale de tringle de talon (33, 40, 310), une première couche annulaire (35, 350) constituée par un certain nombre de fils munis d'une gaine, qui entourent la portion centrale de tringle de talon (33, 40, 310), lesdits plusieurs fils munis d'une gaine dans ladite première couche annulaire (35, 350) possédant tous le même diamètre qui se situe dans une plage allant de 1,5 à 3 mm, et une deuxième couche annulaire (37, 370) formée par un certain nombre de fils munis d'une gaine, qui entourent la première couche annulaire (35, 350), lesdits plusieurs fils munis d'une gaine dans ladite deuxième couche annulaire (37, 370) possédant tous le même diamètre qui se situe dans une plage allant de 1 à 2,5 mm ; dans lequel les fils munis d'une gaine de la deuxième couche annulaire (37, 370) possèdent un diamètre inférieur au diamètre des fils munis d'une gaine de la première couche annulaire (35, 350), **caractérisé en ce que** l'on trouve un total de n rangées annulaires de fils munis d'une gaine dans la première couche annulaire (35, 350) et un total de n-1 rangées de fils munis d'une gaine dans la deuxième couche annulaire (37, 370), n représentant un nombre entier.

2. Bandage pneumatique selon la revendication 1, dans lequel le diamètre des fils munis d'une gaine de la première couche annulaire (35, 350) se situe dans la plage allant de 1,8 à 2,5 mm.

3. Bandage pneumatique selon la revendication 1 ou 2, dans lequel le diamètre des fils munis d'une gaine de la deuxième couche annulaire (37, 370) se situe dans la plage allant de 1 mm à 2 mm ou de 1,5 mm à 2,5 mm.

4. Bandage pneumatique selon au moins une des revendications précédentes, dans lequel la configuration en section transversale de la tringle de talon (30, 140, 240, 300) prend la forme d'un cercle.

5. Bandage pneumatique selon la revendication 4, dans lequel le cercle est formé par la première et la deuxième couches annulaires et la portion centrale de la tringle de talon (33, 40, 310) est une portion creuse ou une portion de forme tubulaire.

6. Bandage pneumatique selon la revendication 4, dans lequel l'intérieur du cercle est rempli avec un métal, un non métal, de l'aramide, des fibres de carbone, une matière de charge en plastique ou est rempli avec de l'air.

7. Bandage pneumatique selon au moins une des revendications précédentes, dans lequel la configuration en section transversale de la portion centrale de la tringle de talon (33, 40, 310) prend la forme d'un cercle.

8. Bandage pneumatique selon au moins une des revendications précédentes, dans lequel la tringle de talon (30, 140, 240, 300) comprend une matière qui est choisie parmi le groupe constitué par le titane, l'aluminium, le magnésium ou un autre alliage métallique ou bien est réalisée à partir d'une telle matière.

9. Bandage pneumatique selon au moins une des revendications précédentes, dans lequel la tringle de talon (30, 140, 240, 300) comprend une matière qui est choisie parmi le groupe constitué par l'aramide, des fibres de carbone, une matière plastique ou une autre matière non métallique ou bien est réalisée à partir d'une telle matière.

10. Bandage pneumatique selon au moins une des revendications précédentes, dans lequel on prévoit deux ou trois rangées annulaires de fils munis d'une gaine dans la première couche annulaire (35, 350).

11. Bandage pneumatique selon au moins une des revendications précédentes, dans lequel on prévoit une ou deux rangées annulaires de fils munis d'une gaine dans la deuxième couche annulaire (37, 370).

12. Bandage pneumatique selon au moins une des revendications précédentes, dans lequel la portion centrale de la tringle de talon (33, 40, 310) possède un diamètre (A) qui se situe dans la plage allant de 3 mm à 20 mm, de préférence dans la plage allant de 5 à 15 mm.

13. Bandage pneumatique selon au moins une des revendications précédentes, dans lequel la tringle de talon (30, 140, 240, 300) est recouverte d'une couche adhésive en caoutchouc et, de manière facultative dans lequel une nappe est enroulée de manière hélicoïdale autour de la tringle de talon (30, 140, 240, 300) et de la couche adhésive caoutchouc.
